# FASCICULE DE BREVET EUROPEEN

(11) **EP 1 084 529 B1**
(45) Date de publication et mention de la délivrance du brevet: **10.07.2002**
(21) Numéro de dépôt: 00911007.3
(22) Date de dépôt: 20.03.2000
(51) Int. Cl.: H02G 1/08

(54) **DISPOSITIF DE CONNEXION D'UN FIL OU CABLE PERMETTANT SA TRACTION, ET METHODE POUR SA MISE EN PLACE**
VORRICHTUNG ZUM VERBINDEN EINES DRAHTES ODER KABELS ZWECKS ZIEHENS SOWIE VERFAHREN ZU DESSEN ANBRINGUNG
DEVICE FOR CONNECTING A WIRE OR CABLE ENABLING THE TRACTION THEREOF AND METHOD FOR THE INSTALLATION THEREOF

(30) Priorité: 02.04.1999 FR 9904306
(43) Date de publication de la demande: 21.03.2001
(73) Titulaire: INSTITUT FRANCAIS DU PETROLE, 92852 Rueil-Malmaison Cedex (FR); Entreprise Vincent Lavabre Mécanique, 31130 Balma (FR); Lavabre, Vincent, 31130 Balma (FR)
(72) Inventeur: LAVABRE, Vincent, F-31130 Balma (FR)
(74) Mandataire: Andreeff, François
(86) Numéro de dépôt international: FR0000693
(87) Numéro de publication internationale: WO0060714

(56) Documents cités:
- DE-A- 1 929 087
- DE-U- 1 806 157
- FR-A- 2 725 845
- FR-A- 2 750 264
- US-A- 1 706 805

## Description

La présente invention concerne un dispositif de connexion de fils ou câbles à un ou plusieurs fils ou conducteurs, à un moyen de traction et une méthode pour sa mise en place.

Le dispositif de connexion est destiné à connecter rapidement un fil ou câble à un moyen de traction permettant de le faire progresser le long d'un conduit ou d'une gaine de protection. Il trouve des applications dans de nombreux domaines, notamment pour faciliter l'accrochage de fils ou câbles électriques à une épingle de tirage associée à une gaine de protection.

Un procédé traditionnel pour réaliser une attache de traction pour câble consiste essentiellement à recourber et vriller les conducteurs du câble sur eux-mêmes pour former une boucle que l'on attache à l'épingle de tirage par du ruban adhésif. Ce procédé de fixation n'est pas pratique. Sa mise en oeuvre est longue et fastidieuse. La boucle réalisée est volumineuse ce qui gêne son passage dans la gaine. Le repliement, surtout si les fils électriques sont relativement rigides (de type mono-brin par exemple), augmente encore la rigidité du câble sur toute la longueur de l'attache, ce qui rend sa progression encore plus difficile dans les coudes à petit rayon de courbure de la gaine, et augmente considérablement les efforts de tirage. C'est particulièrement vrai dans le cas de gaines annelées majoritairement employées dans le bâtiment.

Il est connu également d'utiliser des dispositifs que l'on adapte à l'extrémité de câbles ou tubes divers pour faciliter leur traction. Différents dispositifs sont notamment décrits par exemple dans les demandes de brevet FR 2 596 924, FR 2 725 845, FR 2 750 264, US 4 368 999, EP 395 577, EP 808 007. L'état de la technique le plus proche est décrit dans FR 2 725 845.

La solidarisation s'effectue soit par pincement ou compression du câble ou du tube ou bien par pénétration dans la gaine du câble de pièces mobiles ou flexibles, rabattues sous l'effet de la traction que l'on exerce sur l'attache.

### Définition de l'invention

Le dispositif de connexion selon l'invention permet une connexion particulièrement rapide et sûre, mais aisément amovible d'un ou plusieurs fils (ou d'un câble à au moins un fil) à un moyen de traction. Il est caractérisé par une bague pourvue d'au moins une rainure longitudinale, un élément allongé ou embout, pourvu d'au moins une rainure longitudinale, destiné à venir s'emboîter dans la bague, les rainures longitudinales dans l'embout et la bague formant, lorsqu'elles sont en regard, au moins un logement adapté à la section du fil, des moyens de verrouillage de l'embout dans la bague dans une position angulaire de verrouillage où les rainures correspondantes sont décalées les unes par rapport aux autres, et des éléments saillants adaptés à griffer chaque fil dans cette position de verrouillage.

Les moyens de verrouillage et les éléments saillants peuvent être constitués par des filetages correspondants sur l'embout et la bague sur toute leur longueur d'engagement de l'un dans l'autre, ces filetages réalisant à la fois la solidarisation et le griffage de chaque fil.

Les deux fonctions de verrouillage et d'incrustation dans les fils peuvent encore être réalisés séparément, au moyen de filetages différents ou bien au moyen d'un montage à baïonnette pour l'une et d'éléments saillants d'un type quelconque pour l'autre.

Les rainures sont par exemple sensiblement parallèles à la direction d'allongement (à l'axe) de la bague et de l'embout.

L'embout comporte par exemple une tête pourvue d'une cavité transversale ou longitudinale, éventuellement taraudée, pour la connexion du dispositif au moyen de traction.

Le dispositif de connexion peut être utilisé notamment pour le tirage de fils ou câbles électriques comportant un ou plusieurs fils pleins.

La méthode selon l'invention permet la mise en place, à l'extrémité d'au moins un fil (ou d'un câble comprenant au moins un fil), d'un dispositif de connexion pouvant être connecté à un moyen de traction. Elle comporte l'introduction de chaque fil dans un logement constitué par une rainure longitudinale dans une bague mise en regard d'une rainure longitudinale dans un embout logé dans la bague et le décalage angulaire de l'embout par rapport à la bague permettant à la fois leur solidarisation et l'incrustation dans le fil d'éléments saillants retenant chaque fil en position d'engagement dans son logement.

Les caractéristiques et avantages du dispositif selon l'invention, apparaîtront à la lecture de la description ci-après d'exemples non limitatifs de réalisation, en se référant aux dessins annexés où:
- les Fig.1, 2 montrent respectivement l'élément d'ancrage et la bague qui coopère avec cet élément d'ancrage pour solidariser les fils ou conducteurs d'un câble ;
- la Fig.3 montre schématiquement l'élément d'ancrage et la bague dans une première position angulaire permettant l'introduction des fils dans le dispositif ; et
- la Fig.4 montre schématiquement l'élément d'ancrage et la bague dans une deuxième position angulairement décalée par rapport à la précédente, permettant le blocage des fils dans le dispositif.

### Description détaillée

Le dispositif est mis en place à l'extrémité de fils, éventuellement des différents fils d'un câble comprenant un ou plusieurs fils ou conducteurs (de type mono-brin par exemple), par l'emboîtement d'un élément allongé ou embout 1 et d'une bague 2.

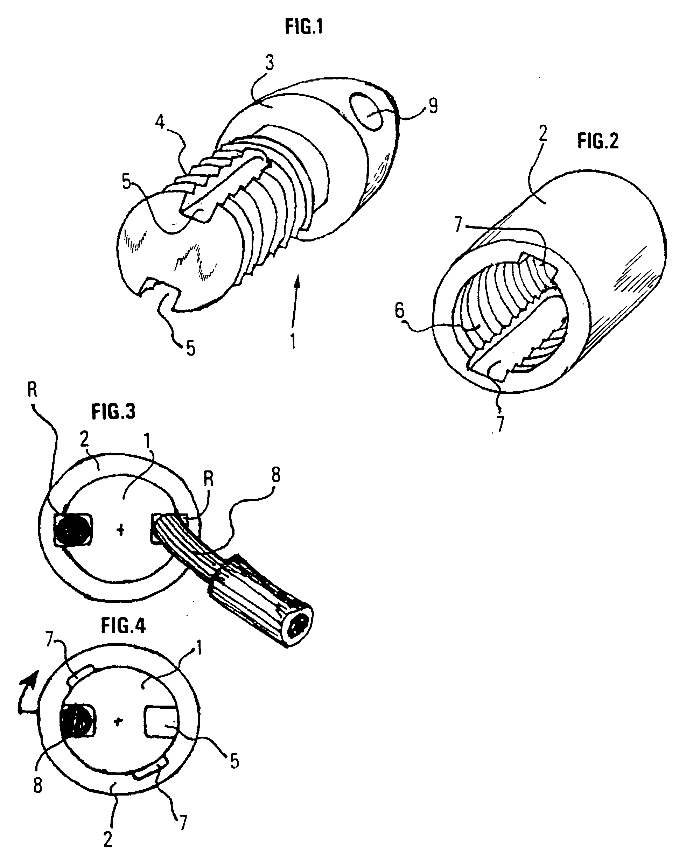

Dans le mode de réalisation des Fig.1 et 2, l'embout comporte une tête 3 prolongée par une partie filetée 4. Sur une partie au moins de sa longueur, cette partie filetée 4 comporte une ou plusieurs rainures longitudinales 5 selon le nombre de fils du câble. La profondeur des rainures 5 dans l'embout 1 est inférieure à la section transversale de chaque fil à connecter. L'embout 1 est adapté à venir se visser sur une partie intérieure filetée 6 de la bague 2. Des rainures longitudinales 7 sont également ménagées à l'intérieur de la bague 2, avec la même répartition angulaire que celles dans la partie filetée 4 de l'embout. Lorsque les rainures 5, 7 dans l'embout et dans la bague sont en regard les unes des autres, elles délimitent des logements R ayant des dimensions adaptées à la section des fils 8 (l'extrémité dénudée de fils électriques par exemple). La tête 3 de l'embout comporte une cavité 9 permettant son accrochage à un moyen de traction. Cette cavité peut être transversale ou bien dirigée suivant l'axe et taraudée, selon le type du moyen de traction utilisé.

Pour réaliser la connexion d'un câble, on amène en coïncidence les rainures respectives 5, 7 de l'embout et de la bague, on engage l'extrémité des fils 8 dans les différents logements formés par ces rainures en regard (Fig.3) et l'on décale angulairement la bague 2 par rapport à l'embout 1 de manière à réaliser un coincement des fils 8 (Fig.4). La profondeur des rainures 5 dans l'embout 1 étant inférieure à la section de chaque fil 8, les filets à l'intérieur de la bague 2 viennent s'y incruster. En choisissant la profondeur des rainures 5 dans l'embout 1, on peut faire varier la profondeur des empreintes laissées par le filetage sur les fils 8 du câble et par là-même la force de retenue exercée sur eux.

La position angulaire des rainures 7 est choisie en fonction de la position qu'occupe la bague 2 par rapport à l'embout 1 quand elle est vissée à fond sur lui. Il faut que l'écart angulaire entre la position où les fils sont engagés dans les logements formés par la mise en coïncidence des rainures 5 et 7 et la position de serrage maximale soit bien sûr strictement inférieure à l'écart angulaire entre deux rainures successives afin d'éviter une possible remise en coïncidence et une libération des fils 8 du câble.

Le serrage de l'embout 1 dans la bague 2 quand les fils sont en place peut être effectué à l'aide d'outils communs, une pince universelle pour enserrer la bague et un simple tournevis par exemple que l'on engage dans la cavité 9.

Le moyen de traction dans les applications électriques, est par exemple une épingle de tirage incluse dans les gaines plastiques.

Le dispositif de connexion tel qu'il est conçu permet d'exercer une traction longitudinale dans les deux sens. Si le câble vient à se coincer dans le tube ou la gaine où on le fait progresser, on peut le dégager en tirant sur lui sans que le dispositif de connexion ne se décroche.

On a décrit un mode de réalisation préféré où la solidarisation de l'embout 1 et de la bague 2 d'une part et les griffures sur les fils 8 sont obtenues par un filetage continu sur les deux pièces. On ne sortirait pas du cadre de l'invention toutefois en dissociant les deux fonctions. La solidarisation de la bague et de l'embout peut dans ce cas être également réalisée par un montage de type à baïonnette par exemple, par engagement d'un ergot solidaire de l'embout 1 jusque dans une rainure au fond de la bague 2, et les griffures sur les fils, faites par des éléments en saillie sur la face interne de la bague ou de l'embout 1.

## Revendications

1. Dispositif de connexion à un moyen de traction, d'au moins un fil (8), **caractérisé en ce qu'**il comporte une bague (2) pourvue d'au moins une rainure longitudinale (7), un élément allongé ou embout (1), pourvu d'au moins une rainure longitudinale (5), destiné à venir s'emboîter dans la bague (2), les rainures longitudinales dans l'embout et la bague formant, lorsqu'elles sont en regard, au moins un logement (R) adapté à la section dudit fil, des moyens de verrouillage de l'embout (1) dans la bague (2) dans une position angulaire de verrouillage où les rainures (5, 7) correspondantes sont décalées les unes par rapport aux autres, et des éléments saillants adaptés à griffer chaque fil dans cette position de verrouillage.

2. Dispositif de connexion selon la revendication 1, **caractérisé en ce que** les moyens de verrouillage et les éléments saillants sont constitués par des filetages (4, 6) correspondants sur l'embout (1) et la bague (2) sur toute leur longueur d'engagement l'un dans l'autre, réalisant à la fois la solidarisation et le griffage de chaque fil (8).

3. Dispositif de connexion selon la revendication 1, **caractérisé en ce que** les éléments saillants sont des filetages (6) sur la face intérieure de la bague (2) ou de l'embout (1).

4. Dispositif de connexion selon la revendication 1 ou 3, **caractérisé en ce que** les moyens de verrouillage comportent des filetages dans l'embout (1) coopérant avec d'autres filetages dans la bague (2).

5. Dispositif de connexion selon la revendication 1 ou 3, **caractérisé en ce que** les moyens de verrouillage sont de type à baïonnette.

6. Dispositif de connexion selon l'une des revendications précédentes, **caractérisé en ce que** les rainures dans la bague (2) et l'embout (1) sont sensiblement parallèles à leur direction d'allongement.

7. Dispositif de connexion selon l'une des revendications précédentes, **caractérisé en ce que** l'embout (1) comporte une tête (3) pourvue d'une cavité (9) pour la connexion du moyen de traction.

8. Dispositif de connexion selon la revendication précédente, **caractérisé en ce que** la cavité (9) dans la tête (3) est dirigée suivant son axe et taraudée.

9. Application du dispositif de connexion selon l'une des revendications précédentes à des câbles électriques comportant un ou plusieurs fils pleins.

10. Méthode pour la mise en place, à l'extrémité d'au moins un fil (8), d'un dispositif de connexion pouvant être connecté à un moyen de traction, comportant :
- l'introduction de chaque fil dans un logement (R) constitué par une rainure longitudinale (7) dans une bague (2) mise en regard d'une rainure longitudinale (5) dans un embout (1) logé dans la bague ; et
- le décalage angulaire de l'embout par rapport à la bague permettant à la fois leur solidarisation et l'incrustation dans le fil d'éléments saillants retenant chaque fil en position d'engagement dans son logement.

## Patentansprüche

1. Vorrichtung zur Verbindung wenigstens eines Drahtes (8) mit einem Zugmittel, **dadurch gekennzeichnet, dass** sie einen mit einer Längsnut (7) versehenen Ring (2) umfasst sowie ein längliches Element oder ein Einsteckende (1), das mit wenigstens einer Längsnut (5) versehen ist, die dazu bestimmt ist, sich in den Ring (2) einzusetzen bzw. in diesen einzurasten, wobei die Längsnuten im Einsteckende und dem Ring, wenn sie einander gegenüberstehen, wenigstens ein dem Querschnitt dieses Drahtes angepasstes Lager (R) bilden, Mittel zur Verriegelung des Einsteckendes (1) in dem Ring (2) in einer Winkelverriegelungsposition, in der die entsprechenden Nuten (5, 7) bezüglich einander versetzt sind sowie vorspringende Elemente, einer Auslegung derart, dass sie jeden Draht in dieser Verriegelungsposition zangenartig erfassen.

2. Verbindungsvorrichtung nach Anspruch 1, **dadurch gekennzeichnet, dass** die Verriegelungsmittel und die vorstehenden Elemente durch entsprechende Gewindeausbildungen (4, 6) auf dem Einsteckende (1) und dem Ring (2) über deren gesamte gegenseitige Eingriffslänge gebildet sind und gleichzeitig für die Festlegung wie das Verhaken jedes Drahtes (8) sorgen.

3. Verbindungsvorrichtung nach Anspruch 1, **dadurch gekennzeichnet, dass** die vorstehenden Elemente Gewinde (6) auf der Innenseite von Ring (2) oder Einsteckende (1) sind.

4. Verbindungsvorrichtung nach Anspruch 1 oder 3, **dadurch gekennzeichnet, dass** die Verriegelungsmittel Gewindeausbildungen im Einsteckende (1) umfassen, die mit anderen Gewindeausbildungen im Ring (2) zusammen wirken.

5. Verbindungsvorrichtung nach Anspruch 1 oder 3, **dadurch gekennzeichnet, dass** die Verriegelungsmittel vom Bajonettverschlusstyp sind.

6. Verbindungsvorrichtung nach einem der vorhergehenden Ansprüche, **dadurch gekennzeichnet, dass** die Nuten im Ring (2) und im Einsteckende (1) im wesentlichen parallel zu ihrer Längsrichtung verlaufen.

7. Verbindungsvorrichtung nach einem der vorhergehenden Ansprüche, **dadurch gekennzeichnet, dass** das Einsteckende (1) einen Kopf (3) umfasst, der mit einer Ausnehmung (9) zur Verbindung des Zugmittels versehen ist.

8. Verbindungsvorrichtung nach dem vorhergehenden Anspruch, **dadurch gekennzeichnet, dass** die Ausnehmung (9) im Kopf (3) entsprechend seiner Achse ausgerichtet und mit Innengewinde versehen ist.

9. Anwendung der Verbindungsvorrichtung nach einem der vorhergehenden Ansprüche auf elektrische Kabel, die einen oder mehrere massive Drähte umfassen.

10. Verfahren zur Anbringung - am Ende wenigstens eines Drahtes (8) - einer Verbindungsvorrichtung, die mit einem Zugmittel verbunden sein kann, umfassend:
- das Einführen jedes Drahtes in ein durch eine Längsnut (7) in einem Ring (2) gebildetes Lager (R) gegenüber einer Längsnut (5) in dem im Ring gelagerten Einsteckende (1) und
- Winkelverschiebung des Einsteckendes bezüglich des Rings, wodurch gleichzeitig deren Fixierung und das Einpressen von vorstehenden Elementen in den Draht gewährleistet ist, wobei die vorstehenden Elemente jeden Draht in eine Eingriffsstellung in seinem Lager halten.

## Claims

1. Device for the connection to a means of traction of at least one wire (8), **characterised in that** it has a ring (2) with at least one longitudinal groove (7) and an extended element or end fitting (1) with at least one longitudinal groove (5) destined to fit into the ring (2), the longitudinal grooves in the end fitting and the ring forming, when they are opposite each other, at least one space (R) matching the cross-section of the said wire, means of locking the end fitting (1) in the ring in an angular locking position where the corresponding grooves (5 and 7) are offset relative to each other, and projecting elements suitable for scoring each wire in this locking position.

2. Connecting device according to Claim 1, **characterised in that** the means of locking and the projecting elements are constituted by matching threads (4 and 6) on the end fitting (1) and the ring (2) over the whole length of their engagement with each other, simultaneously achieving both fixing together and the scoring of each wire.

3. Connecting device according to Claim 1, **characterised in that** the projecting elements are threads (6) on the inside face of the ring (2) or the end fitting (1).

4. Connecting device according to Claim 1 or Claim 3, **characterised in that** the means of locking include threads in the end fitting (1) that operate in association with other threads in the ring (2).

5. Connecting device according to Claim 1 or Claim 3, **characterised in that** the means of locking are of the bayonet type.

6. Connecting device according to one of the previous Claims, **characterised in that** the grooves in the ring (2) and the end fitting (1) are approximately parallel to their longitudinal axis.

7. Connecting device according to one of the previous Claims, **characterised in that** the end fitting (1) has a head (3) with a cavity (9) for the connection to the means of traction.

8. Connecting device according to the previous Claim, **characterised in that** the cavity (9) in the head (3) is oriented along its axis and tapped.

9. Application of the connecting device according to one of the previous Claims to electric cables comprising one or more solid wires.

10. Method for fitting, on the end of at least one wire (8), of a connecting device capable of being connected to a means of traction and including:
- the insertion of each wire into a space (R) constituted by a longitudinal groove (7) in a ring (2) facing a longitudinal groove (5) in an end fitting (1) housed in the ring, and
- an angular offset of the end fitting relative to the ring, allowing their attachment together simultaneously with the penetration into the wire of projecting elements retaining each wire in the engaged position in its space.
